# EUROPEAN PATENT SPECIFICATION

(11) **EP 2 783 090 B1**
(45) Date of publication and mention of the grant of the patent: **03.02.2016**
(21) Application number: 12812285.0
(22) Date of filing: 21.11.2012
(51) Int. Cl.: F02B 29/04, F28F 9/02

(54) **END COVER FOR CHARGE AIR COOLER**
TOPFGEHÄUSE FÜR LADELUFTKÜHLER
COUVERCLE D'EXTRÉMITÉ POUR REFROIDISSEUR D'AIR DE SURALIMENTATION

(30) Priority: 24.11.2011 FI 20116174
(43) Date of publication of application: 01.10.2014
(73) Proprietor: Wärtsilä Finland Oy, 65380 Vaasa (FI)
(72) Inventor: FERRO, Maurizio, I-34018 Trieste (IT); GHETTI, Stefano, I-34018 Trieste (IT)
(74) Representative: Berggren Oy Ab
(86) International application number: PCT/FI2012/051152
(87) International publication number: WO 2013/076369

(56) References cited:
- EP-A2- 1 336 736
- WO-A1-2005/033489
- DE-A1-102007 010 123
- JP-A- 61 237 998
- US-A- 2 843 367

## Description

### Technical field of the invention

The present invention relates to an end cover for a charge air cooler of an internal combustion engine in accordance with the preamble of claim 1.

### Background of the invention

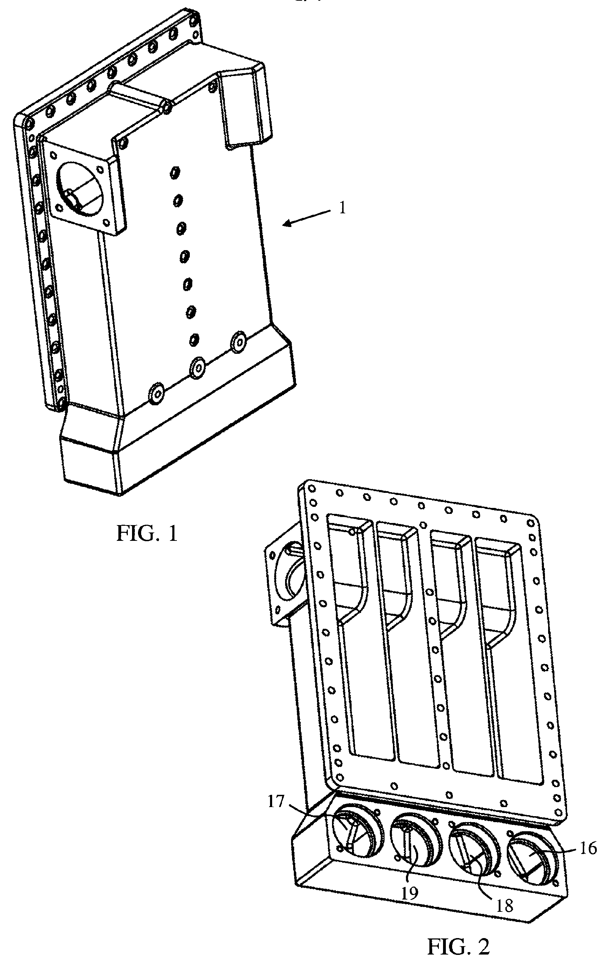

Most turbocharged large internal combustion engines, such as ship or power plant engines, are provided with charge air coolers for reducing the temperature of the intake air before the air is introduced into the cylinders of the engine. In certain types of engines, the charge air coolers are arranged inside the turbocharger bracket. In a V-engine, both banks of the engine may be provided with an own charge air cooler. The charge air cooler comprises and end cover that is a heavy cast iron piece, which may weigh up to 300 kg or more. In figures 1 and 2 is shown an example of such an end cover. The circular openings at the lower end of the end cover accommodate connecting pipes, which are used for connecting the end cover to flow channels in the turbocharger bracket or to separate pipes below the turbocharger bracket. O-rings are used for sealing the contact surfaces between the end cover and the connecting pipes and between the flow channels and the connecting pipes. In case of any leakage that requires replacement of the O-rings, the whole end cover needs to be removed from the charge air cooler. In connection with the removal of the end cover, also some piping and automation cables need to be dismounted. In some cases, it is even necessary to remove the silencer of the turbocharger before the end cover can be removed. Replacement of the O-rings may thus take up to 36 man-hours. Hoisting equipment is needed for lifting the heavy parts, and the operation of the engine is interrupted for a long time.

An intercooler for a large interval combustion engine is shown in US 2 843 367 A.

### Summary of the invention

The object of the present invention is to provide an improved end cover for a charge air cooler of an internal combustion engine. The characterizing features of the end cover according to the present invention are given in the characterizing part of claim 1.

An end cover according to the present invention comprises a cover plate, outer walls that are arranged around the end cover, inner walls that are arranged within the area delimited by the outer walls and define together with the outer walls a first chamber, a second chamber, a third chamber and a fourth chamber. A connecting surface is arranged at the second end of the end cover for covering part of the first, second, third and fourth chambers on the opposite side of the walls of the end cover in relation to the cover plate. The connecting surface is provided with openings to at least three of the first, second, third and fourth chambers for accommodating connecting pipes. The second end of the end cover is provided with maintenance holes on the cover plate side of the end cover for accessing those of the first, second, third and fourth chambers that are provided with the openings on the connecting surface.

With an end cover according to the invention, the connecting pipes that connect the end cover to the flow channels of the turbocharger bracket or to the pipes below the turbocharger bracket can be easily accessed. It is thus easy to replace the O-rings that are used for sealing the contact surfaces between the connecting pipes and the end cover or between the connecting pipes and the flow channels of the turbocharger bracket. Since there is no need to remove the whole end cover or piping and automation cables, the service time can be reduced in some cases from 36 man-hours to 1 man-hour. This significantly reduces the down time of the engine. Also the need for hoisting equipment that is normally needed for lifting the heavy end cover and other parts is eliminated.

According to an embodiment of the invention, the end cover is a one-piece casting. According to another embodiment of the invention, the end cover is provided with at least one removable maintenance hole cover for covering the maintenance holes. The maintenance hole cover can be a one-piece part, such as a casting or a steel plate, or each of the maintenance holes can be provided with an own cover. A gasket is arranged between the end cover and the maintenance hole cover.

According to another embodiment of the invention, the maintenance holes are aligned with the openings on the connecting surface, and the diameter of the maintenance holes is larger than the diameter of the openings on the connecting surface. The connecting pipes can thus be removed by pulling them through the maintenance holes.

According to another embodiment of the invention, the end cover comprises a flow channel that is arranged at the first end of the end cover in parallel with a first end wall and extends from a first side wall to a second side wall.

According to another embodiment of the invention, the connecting surface is provided with an opening to each of the first, second, third and fourth chambers. Although only three of the openings are needed, it is practical to provide the end cover with four openings. An identical end cover can thus be used in V-engines on both sides of the engine.

### Brief description of the drawings

Fig. 1 shows a prior art end cover for a charge air cooler of an internal combustion engine.
Fig. 2 shows another view of the end cover of Fig. 1.
Fig. 3 shows the outside of an end cover according to an embodiment of the invention.
Fig. 4 shows the inside of the end cover of Fig. 3.
Fig. 5 shows a side view of the end cover of Fig. 3.
Fig. 6 shows a cross-sectional view of the end cover of Fig. 5 taken along line A-A.
Fig. 7 shows the end cover in connection with a turbocharger bracket.
Fig. 8 shows a cross-sectional view of the end cover.
Fig. 9 shows part of the end cover with a maintenance hole cover.
Fig. 10 shows a locking arrangement for connecting pipes.

### Detailed description of the invention

Embodiments of the invention are now described in more detail with reference to the accompanying drawings.

In figures 1 and 2 is shown a prior art end cover 1 for a charge air cooler of a turbocharged internal combustion engine. The engine, where the end cover 1 of the charge air cooler can be used, is a large internal combustion engine, such as a main or an auxiliary engine of a ship or an engine that is used at a power plant for producing electricity. The circular openings 16, 17, 18, 19 at the lower end of the end cover 1 accommodate connecting pipes, which are used for connecting the end cover 1 to flow channels in the turbocharger bracket. For replacing the O-rings that are used between the connecting pipes and the end cover 1 and between the connecting pipes and the flow channels of the turbocharger bracket, the whole end cover 1 needs to be removed from the charge air cooler. Before being able to remove the end cover 1, also the silencer of the turbocharger needs to be removed. Also some piping and automation cables need to be dismounted. This is very time-consuming and leads to a long engine down time when the connecting pipes are serviced.

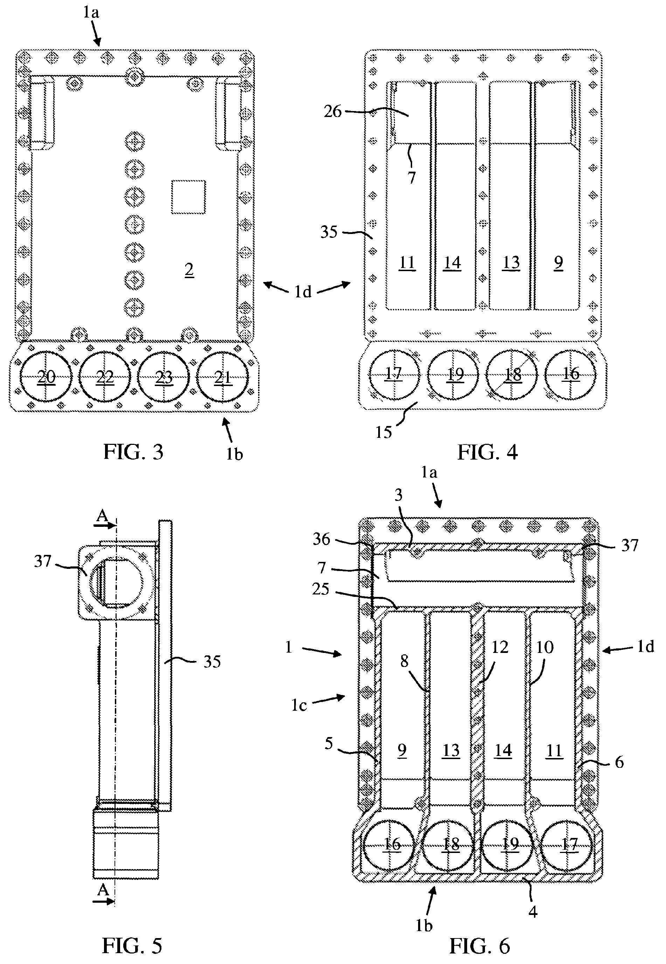

In figures 3-6 is shown an end cover 1 according to an embodiment of the invention. The end cover 1 comprises a cover plate 2 having a first end 1a, a second end 1b that is opposite to the first end 1a, a first side 1c, and a second side 1d that is opposite to the first side 1c. The end cover 1 comprises outer walls 3, 4, 5, 6 that are arranged around the cover plate 1 for forming a trough. A first end wall 3 is arranged at the first end 1a of the end cover 1, a second end wall 4 is arranged at the second end 1b of the end cover 1, a first side wall 5 is arranged on the first side 1c of the end cover 1 and a second side wall 6 is arranged on the second side 1d of the end cover 1. Each of the walls 3, 4, 5, 6 extends perpendicularly away from the plane that is defined by the cover plate 2. The end cover 1 also comprises a first inner wall 8 that is arranged in parallel with the first side wall 5 for defining a first chamber 9 on the first side 1c of the end cover 1. A second inner wall 10 is arranged in parallel with the second side wall 6 for defining a second chamber 11 on the second side 1d of the end cover 1. A third inner wall 12 is arranged in parallel with the first inner wall 8 and the second inner wall 10 for dividing the space between the first inner wall 8 and the second inner wall 10 into a third chamber 13 and a fourth chamber 14. Each of the inner walls 8, 10, 12 is joined to the first end wall 3 and to the second end wall 4. The end cover 1 is further provided with a flow channel 7 that is arranged at the first end 1a of the end cover 1. The flow channel 7 extends from the first side wall 5 to the second side wall 6. The flow channel 7 is formed of a fourth inner wall 25, a flow channel cover 26, and the first end wall 3. The fourth inner wall 25 is arranged in parallel with the first end wall 3 and extends from the first side wall 5 to the second side wall 6. The fourth inner wall 25 is lower than the other inner walls 8, 10, 12. The flow channel cover 26, which is arranged in parallel with the cover plate 2, joins to the fourth inner wall 25, the first end wall 3, the first side wall 5 and the second side wall 6. Both ends of the flow channel 7 are open. First end of the flow channel 7 is provided with a first connecting flange 36, and second end of the flow channel 7 is provided with a second connecting flange 37. The end cover 1 can be manufactured as a one-piece casting for example from cast iron.

A connecting surface 15 is arranged at the second end 1b of the end cover 1 for covering part of the first, second, third and fourth chambers 9, 11, 13, 14. The connecting surface 15 is on the opposite side of the walls 4, 5, 6, 8, 10, 12 of the end cover 1 in relation to the cover plate 2. The connecting surface 15 can be an integral part of the end cover 1. The connecting surface 15 is provided with openings 16, 17, 18, 19 to the first, second, third and fourth chambers 9, 11, 13, 14 for accommodating connecting pipes. Only three of the openings 16, 17, 18, 19 are normally needed, and either the third or the fourth opening 18, 19 is unnecessary. However, it is practical to make the end cover 1 symmetrical, and the extra opening 18, 19 can be plugged. The end cover 1 is provided with a flange 35 for fastening the end cover to a charge air cooler. The flange 35 surrounds the first end 1a and the first and second sides 1c, 1d of the end cover 1. At the second end 1b of the end cover 1, the connecting surface 15 is outside the perimeter that is defined by the flange 35.

The second end 1b of the end cover 1 is provided with maintenance holes 20, 21, 22, 23 on the cover plate side of the end cover 1 for accessing the first, second, third and fourth chambers 9, 11, 13, 14. Again, one of the third and the fourth maintenance holes 22, 23 is unnecessary, but it is practical to make the end cover 1 to include all four maintenance holes 20, 21, 22, 23 for being able to use an identical end cover 1 on both sides of a V-engine. The maintenance holes 20, 21, 22, 23 are aligned with the openings 16, 17, 18, 19 on the opposite side of the end cover 1. The maintenance holes 20, 21, 22, 23 have larger diameter than the openings 16, 17, 18, 19 on the connecting surface 15.

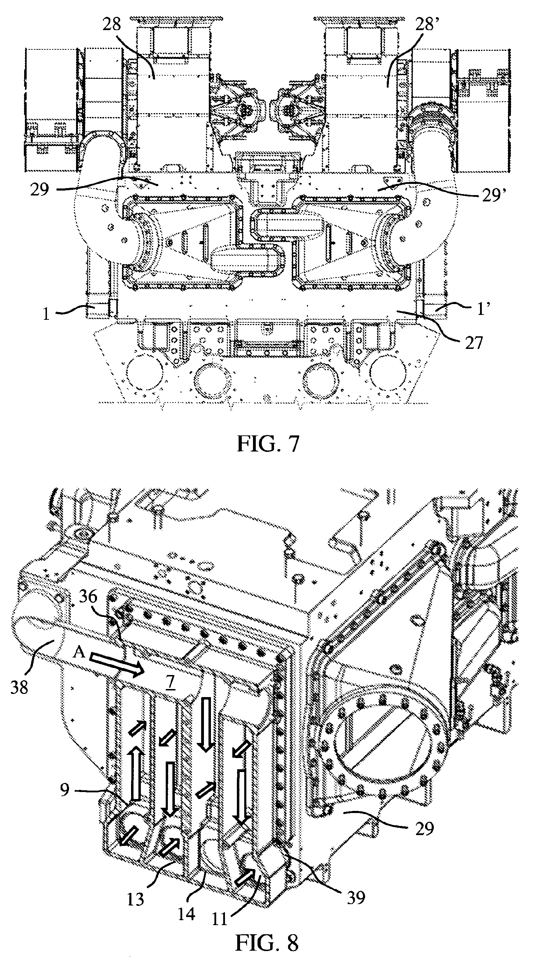

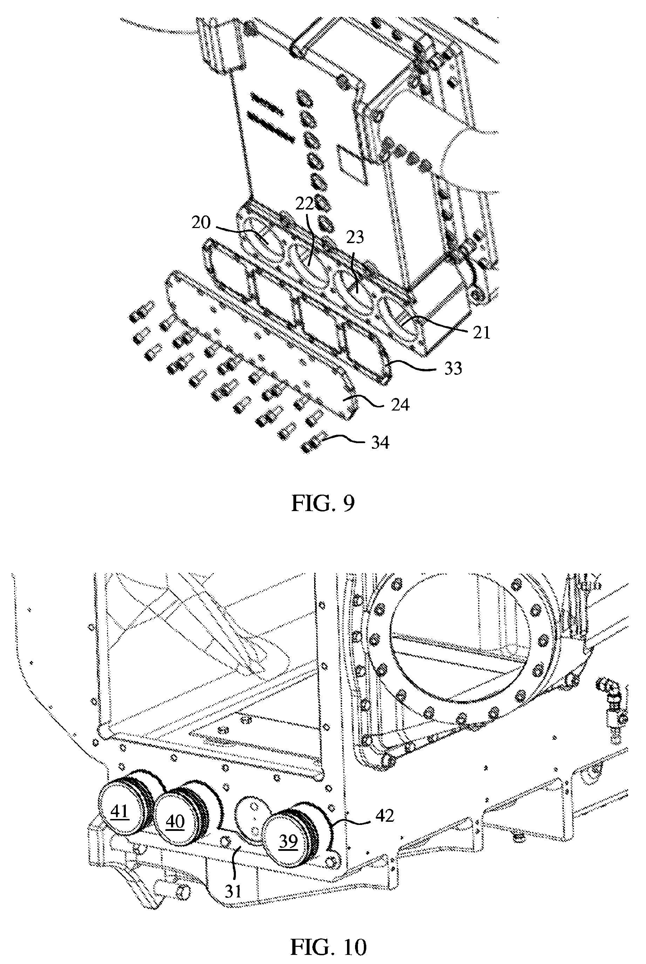

Figure 7 shows two end covers 1, 1' in connection with the turbocharger bracket 27 of a V-engine. The engine (not shown) comprises a first turbocharger 28 for the first bank of the engine and a second turbocharger 28' for the second bank of the engine. There is a charge air cooler 29, 29' for each bank of the engine, and both charge air coolers 29, 29' comprise an end cover 1, 1'. In figure 8 the end cover 1 is shown in connection with the charge air cooler 29. A high temperature duct 38 is connected to the first connecting flange 36 of the end cover 1. The second end of the flow channel 7 is plugged. High temperature cooling water is introduced into the fourth chamber 14 of the end cover 1 in the direction of arrow A through the flow channel 7. From the fourth chamber 14, the water enters the high-temperature circuit of the charge air cooler 29. The opening 19 of the fourth chamber 14 is plugged. The high-temperature circuit comprises high-temperature pipes (not shown), through which the cooling water flows into the second chamber 11. Heat of the intake air is conducted to the cooling water when the intake air flows through the charge air cooler 29. From the second chamber 11, the high-temperature water can flow through a connecting pipe 39 into a flow channel that is arranged in the turbocharger bracket 27. The charge air cooler 29 further comprises a low-temperature circuit, which comprises low-temperature pipes (not shown). Low-temperature cooling water is introduced into the end cover 1 through a connecting pipe 41 (shown in Fig. 10) and the opening 16 of the first chamber 9. From the first chamber 9, the low-temperature water can flow through the low-temperature pipes into the third chamber 13. From the third chamber 13, the low-temperature water is introduced through a connecting pipe 40 (shown in Fig. 10) into a flow channel that is arranged in the turbocharger bracket 27. The connecting pipes 39, 40, 41 are provided with O-rings for sealing the joints between the connecting pipes 39, 40, 41 and the end cover 1 and between the connecting pipes 39, 40, 41 and the flow channels of the turbocharger bracket 27.

A locking arrangement for the connecting pipes 39, 40, 41 is shown in figure 10. Each of the connecting pipes 39, 40, 41 is provided with a locking groove 42 that is arranged close to the turbocharger end of the connecting pipe 39, 40, 41. When the connecting pipe 39, 40, 41 is inserted into the flow channel in the turbocharger bracket 27, the locking groove 42 is at the level of the outer surface of the turbocharger bracket 27. A locking bar 31 is inserted into the locking groove 42 and bolted to the turbocharger bracket 27. The same locking bar 31 can be used for locking all the connecting pipes 39, 40, 41. The end cover 1 is provided with a removable maintenance hole cover 24 for covering the maintenance holes 20, 21, 22, 23, as shown in figure 9. A gasket 33 is arranged between the end cover 1 and the maintenance hole cover 24 for sealing the mating surface between the two parts 1, 24. The maintenance hole cover 24 is fastened to the end cover 1 with bolts 34. The maintenance hole cover 24 can be, for instance, a casting or a steel plate. Instead of a one-piece maintenance hole cover 24, the end cover 1 could be provided with separate covers for each of the maintenance holes 20, 21, 22, 23. When there is a need to replace the O-rings of the connecting pipes 39, 40, 41, the maintenance hole cover 24 can be removed by opening the bolts 34. Also the locking bar 31 is removed, and the connecting pipes 39, 40, 41 can then be pulled out through the maintenance holes 20, 21, 22 together with the O-rings. No other parts need to be removed. The number of man-hours needed for replacing the O-rings can be reduced to 1 from the 36 man-hours that are needed with the conventional end covers 1.

It will be appreciated by a person skilled in the art that the invention is not limited to the embodiments described above, but may vary within the scope of the appended claims. For instance, instead of being integrated to the end cover, the flow channel for the high temperature cooling water can be a separate part. Also the connecting surface could be a separate part. The maintenance holes could have some other shape than circular.

## Claims

1. An end cover (1) for a charge air cooler of a turbocharged internal combustion engine, which end cover (1) comprises
- a cover plate (2),
- outer walls (3, 4, 5, 6) that are arranged around the cover plate (2),
- inner walls (8, 10, 12) that are arranged within the area delimited by the outer walls (3, 4, 5, 6) and define together with the outer walls (3, 4, 5, 6) a first chamber (9), a second chamber (11), a third chamber (13) and a fourth chamber (14), and
- a connecting surface (15) that is arranged at a second end (1b) of the end cover (1) for covering part of the first, second, third and fourth chambers (9, 11, 13, 14) on the opposite side of the walls (4, 5, 6, 8, 10, 12) of the end cover (1) in relation to the cover plate (2), which connecting surface (15) is provided with openings (16, 17, 18, 19) to at least three of the first, second, third and fourth chambers (9, 11, 13, 14) for accommodating connecting pipes (39, 40, 41),
**characterized in that** the second end (1b) of the end cover (1) is provided with maintenance holes (20, 21, 22, 23) on the cover plate side of the end cover (1) for accessing those of the first, second, third and fourth chambers (9, 11, 13, 14) that are provided with the openings (16, 17, 18, 19) on the connecting surface (15).

2. An end cover (1) according to claim 1, **characterized in that** the end cover (1) is a one-piece casting.

3. An end cover (1) according to claim 1, **characterized in that** the end cover (1) is provided with at least one removable maintenance hole cover (24) for covering the maintenance holes (20, 21, 22, 23).

4. An end cover (1) according to any of claims 1-3, **characterized in that** the maintenance holes (20, 21, 22, 23) are aligned with the openings (16, 17, 18, 19) on the connecting surface (15), and the diameter of the maintenance holes (20, 21, 22, 23) is larger than the diameter of the openings (16, 17, 18, 19) on the connecting surface (15).

5. An end cover (1) according to any of the preceding claims, **characterized in that** the end cover (1) comprises a flow channel (7) that is arranged at a first end (1a) of the end cover (1) in parallel with a first end wall (3) and extends from a first side wall (5) to a second side wall (6).

6. An end cover (1) according to any of the preceding claims, **characterized in that** the connecting surface (15) is provided with an opening (16, 17, 18, 19) to each of the first, second, third and fourth chambers (9, 11, 13, 14).

## Patentansprüche

1. Topfgehäuse (1) für einen Ladeluftkühler eines aufgeladenen Verbrennungsmotors, wobei das Topfgehäuse (1) Folgendes umfasst:
- eine Abdeckplatte (2);
- Außenwände (3, 4, 5, 6), die um die Abdeckplatte (2) herum angeordnet sind;
- Innenwände (8, 10, 12), die innerhalb des Bereichs, der durch die Außenwände (3, 4, 5, 6) begrenzt ist, angeordnet sind und zusammen mit den Außenwänden (3, 4, 5, 6) eine erste Kammer (9), eine zweite Kammer (11), eine dritte Kammer (13) und eine vierte Kammer (14) definieren; und
- eine Anschlussfläche (15), die an einem zweiten Ende (1b) des Topfgehäuses (1) angeordnet ist, um einen Teil der ersten, zweiten, dritten und vierten Kammer (9, 11, 13, 14) an der in Bezug auf die Abdeckplatte (2) entgegengesetzten Seite der Wände (4, 5, 6, 8, 10, 12) des Topfgehäuses (1) abzudecken, wobei die Anschlussfläche (15) mit Öffnungen (16, 17, 18, 19) zu wenigstens drei aus der ersten, zweiten, dritten und vierten Kammer (9, 11, 13, 14) zur Unterbringung von Anschlussrohren (39, 40, 41) versehen ist,
**dadurch gekennzeichnet, dass** das zweite Ende (1b) des Topfgehäuses (1) an der Abdeckplattenseite des Topfgehäuses (1) mit Wartungsöffnungen (20, 21, 22, 23) zum Zugang zu jenen aus der ersten, zweiten, dritten und vierten Kammer (9, 11, 13, 14), die mit den Öffnungen (16, 17, 18, 19) an der Anschlussfläche (15) versehen sind, ausgestattet ist.

2. Topfgehäuse (1) nach Anspruch 1, **dadurch gekennzeichnet, dass** das Topfgehäuse (1) ein einstückiges Gussteil ist.

3. Topfgehäuse (1) nach Anspruch 1, **dadurch gekennzeichnet, dass** das Topfgehäuse (1) mit wenigstens einer abnehmbaren Wartungsöffnungsabdeckung (24) zum Abdecken der Wartungsöffnungen (20, 21, 22, 23) versehen ist.

4. Topfgehäuse (1) nach einem der Ansprüche 1 - 3, **dadurch gekennzeichnet, dass** die Wartungsöffnungen (20, 21, 22, 23) mit den Öffnungen (16, 17, 18, 19) an der Anschlussfläche (15) ausgerichtet sind, und der Durchmesser der Wartungsöffnungen (20, 21, 22, 23) größer als der Durchmesser der Öffnungen (16, 17, 18, 19) an der Anschlussfläche (15) ist.

5. Topfgehäuse (1) nach einem der vorhergehenden Ansprüche, **dadurch gekennzeichnet, dass** das Topfgehäuse (1) einen Fließkanal (7) umfasst, der an einem ersten Ende (la) des Topfgehäuses (1) parallel zu einer ersten Endwand (3) angeordnet ist und sich von einer ersten Seitenwand (5) zu einer zweiten Seitenwand (6) erstreckt.

6. Topfgehäuse (1) nach einem der vorhergehenden Ansprüche, **dadurch gekennzeichnet, dass** die Anschlussfläche (15) mit einer Öffnung (16, 17, 18, 19) zu jeder aus der ersten, zweiten, dritten und vierten Kammer (9, 11, 13, 14) versehen ist.

## Revendications

1. Couvercle d'extrémité (1) pour un refroidisseur d'air de suralimentation pour un moteur à combustion interne à turbocompresseur, lequel couvercle d'extrémité (1) comprend :
- une plaque de couvercle (2),
- des parois extérieures (3, 4, 5, 6) qui sont agencées autour de la plaque de couvercle (2),
- des parois intérieures (8, 10, 12) qui sont agencées à l'intérieur de la zone délimitée par les parois extérieures (3, 4, 5, 6) et définissent conjointement avec les parois extérieures (3, 4, 5, 6) une première chambre (9), une deuxième chambre (11), une troisième chambre (13) et une quatrième chambre (14), et
- une surface de liaison (15) qui est agencée à une seconde extrémité (1b) du couvercle d'extrémité (1) pour couvrir une partie des première, deuxième, troisième et quatrième chambres (9, 11, 13, 14) sur le côté opposé des parois (4, 5, 6, 8, 10, 12) du couvercle d'extrémité (1) par rapport à la plaque de couvercle (2), laquelle surface de liaison (15) est dotée d'ouvertures (16, 17, 18, 19) vers au moins trois des première, deuxième, troisième et quatrième chambres (9, 11, 13, 14) pour recevoir des tuyaux de raccordement (39, 40, 41),
**caractérisé en ce que** la seconde extrémité (1b) du couvercle d'extrémité (1) est dotée d'orifices de maintenance (20, 21, 22, 23) sur le côté de la plaque de couvercle du couvercle d'extrémité (1) pour accéder à celles des première, deuxième, troisième et quatrième chambres (9, 11, 13, 14) qui sont dotées des ouvertures (16, 17, 18, 19) sur la surface de liaison (15).

2. Couvercle d'extrémité (1) selon la revendication 1, **caractérisé en ce que** le couvercle d'extrémité (1) est une pièce moulée d'un seul tenant.

3. Couvercle d'extrémité (1) selon la revendication 1, **caractérisé en ce que** le couvercle d'extrémité (1) est doté d'au moins un couvercle d'orifice de maintenance (24) amovible, pour couvrir les orifices de maintenance (20, 21, 22, 23).

4. Couvercle d'extrémité (1) selon l'une quelconque des revendications 1 - 3, **caractérisé en ce que** les orifices de maintenance (20, 21, 22, 23) sont alignés avec les ouvertures (16, 17, 18, 19) sur la surface de liaison (15), et le diamètre des orifices de maintenance (20, 21, 22, 23) est plus grand que le diamètre des ouvertures (16, 17, 18, 19) de la surface de liaison (15).

5. Couvercle d'extrémité (1) selon l'une quelconque des revendications précédentes, **caractérisé en ce que** le couvercle d'extrémité (1) comprend un canal d'écoulement (7) qui est agencé sur une première extrémité (la) du couvercle d'extrémité (1) en parallèle avec une première paroi d'extrémité (3) et s'étend depuis une première paroi latérale (5) vers une seconde paroi latérale (6).

6. Couvercle d'extrémité (1) selon l'une quelconque des revendications précédentes, **caractérisé en ce que** la surface de liaison (15) est dotée d'une ouverture (16, 17, 18, 19) vers chacune des première, deuxième, troisième et quatrième chambres (9, 11, 13, 14).
